(19) Europäisches Patentamt
European Patent Office
Office européen des brevets

(11) **EP 2 123 707 B1**

(12) **EUROPEAN PATENT SPECIFICATION**

(45) Date of publication and mention
of the grant of the patent:
**06.10.2010 Bulletin 2010/40**

(51) Int Cl.:
***C08L 23/06*** (2006.01) ***C09D 123/04*** (2006.01)

(21) Application number: **08104018.0**

(22) Date of filing: **19.05.2008**

(54) **Extrusion coating polyethylene composition**

Extrusionsbeschichtung einer Polyethylenzusammensetzung

Composition de polyéthylène de revêtement par extrusion

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**25.11.2009 Bulletin 2009/48**

(73) Proprietor: **Borealis Technology OY**
**06101 Porvoo (FI)**

(72) Inventors:
 • **Nummila-Pakarinen, Auli**
**06100, Porvoo (FI)**
 • **Sainio, Markku**
**06100, Porvoo (FI)**
 • **Laiho, Erkki**
**00280, Helsinki (FI)**
 • **Yli-Peltola, Juha**
**00810, Helsinki (FI)**
 • **Kirchberger, Manfred**
**4731, Prambachkirchen (AT)**

(74) Representative: **Campbell, Neil Boyd et al**
**Dehns**
**St Bride's House**
**10 Salisbury Square**
**London**
**EC4Y 8JD (GB)**

(56) References cited:
**EP-A- 1 777 238      US-A1- 2007 225 445**

# EP 2 123 707 B1

## Description

<u>Background of the Invention</u>

In extrusion coating a thin film of polymer melt is extruded through a flat die and pressed onto a moving substrate. The substrate may be, among others, paper, paperboard, a plastic film or a metal film. The line speed in modern equipment can be very high, up to 1000 m/min or even more.

The increasing processing and product requirements and quality demands may result in several different problems that can occur in the extrusion coating process. Examples of these problems are edge waving, edge tear or web break. The rheology-related phenomena that may cause problems in extrusion coating are for example web stability, neck-in and draw down.

The web stability is a problem with film processes, because between the die exit and the cooling roll several competing forces combine to complicate the web cooling process.

A further crucial point is the neck-in, which is, in short, the difference between the width of the die and the width of the coating on the substrates. A neck-in as low as possible is preferred, since a low neck-in leads to a low amount of wasted polymer as the thicker edges need to be cut away. Even coating weight and stable edges are important features for good product and reel quality. Especially unstable edges can lead to uncoated edge areas of the substrate.

In addition the draw down, the ability of a melt to be drawn to thin films without breaking and the maximum line speed at which the polymer web breaks, is an important factor in extrusion coatings. The draw down of the material needs to be high in order to obtain good quality of the coating at high line speeds. Limitations in draw down may also lead to draw resonance with uneven coating weight and unstable edges as result.

<u>Field of the Invention</u>

The present invention deals with polymer compositions to be used in extrusion coating processes.

The compositions show improved processability and can be extrusion coated at high line speeds with low neck-in and high draw down. Furthermore edge and web stability is improved.

Particularly the invention relates to compositions comprising low density polyethylene, produced in a high pressure tubular reactor, and a special low density ethylene polymer, having a higher content of long chain branches per 1000 atoms in the polymer backbone than the traditional low density polyethylenes of the prior art.

LDPE, which typically has a density range of from 910 to 935 kg/m$^3$ and which is most commonly prepared by free radical polymerization processes in either a tubular reactor or an autoclave reactor, is often used for extrusion coating due to its good neck-in and draw down properties.

LDPE obtained with an autoclave process is suitable to be applied in extrusion coating for reasons of processability (web stability, draw-down and neck-in) in relation to the molecular composition (broad distribution, long chain branching) of the polymer.

The tubular process produces LDPE of a narrow molecular weight distribution and with a lower degree of long chain branching, but with proper mechanical characteristics, making it possible to produce higher density and stiffer resins. Typically, the tubular reactors have more favourable production economics because they can run at higher production rates, have higher ethylene conversion rates and can use air or oxygen in the first stage of reaction initiation instead of more costly peroxide.

For extrusion coating processes it is desirable to find polyethylene compositions, whose physical and chemical properties form a combination of those respectively obtained using an autoclave reactor and a tubular reactor.

The following documents, amongst others, therefore propose special blends for extrusion coating:

WO 2006/096504 discloses blends of high pressure low density polyethylene, produced in a tubular reactor as the major component and a high melt strength polyethylene produced in an autoclave reactor as the minor component. The blends may be produced via different methods, for example via mechanical blending or autoclave-tubular reactors in series.

According to WO 2006/096504 such polymer compositions may be used for any application or process where an increased melt strength at a given melt index is an advantage including but not limited to extrusion coating, cast and blown film.

US 2007/0225445 describes polymer blends which are prepared by physically blending a) 75 to 25 wt% of an ethylene homopolymer produced in a tubular reactor, which may have a melt index of from 4 to 10 g/10 min, a density of 914 to 930 kg/m$^3$ and a polydispersity, $M_w/M_n$, of 8 or more and 0 to 500 ppm of an antioxidant with b) 25 to 75 wt% of an ethylene homopolymer produced in an autoclave reactor, which may have a melt index of from 3 to 9 g/10 min, a density of at least 910 kg/m$^3$ and a polydispersity, $M_w/M_n$ of at least 10.

According to US 2007/0225445 these blends show a good combination of neck-in and adhesion properties at high draw down rates and are used for extrusion coating.

EP 1 777 238 discloses a special LDPE having a melt index $MFR_2$ of 2.5 to 10.0 g/10 min, especially from 2.5 to 6.5 g/10 min and a density of 910 to 935 kg/m³, preferably prepared in an autoclave reactor. In addition this special LDPE has a dynamic viscosity $\eta_{0.05}$ at a shear rate of 0.05 rad/s and a dynamic viscosity $\eta_{300}$ rad/s which satisfy the following relationship:

$$\eta_{300} \leq 108 \text{ Pa*s} + 0.0253* \eta_{0.05}$$

and/or
a phase shift $\delta_{0.5}$ at a frequency of 0.5 rad/s and a phase shift $\delta_{300}$ at a frequency of 300 rad/s, which satisfy the following relationship:

$$\tan \delta_{300} \geq 0.45 + 0.164* \tan \delta_{0.5}$$

According to the description and the Examples of EP 1 777 238 this special LDPE can be blended with other polymers, especially with olefin polymers produced by copolymerising ethylene with one or more alpha-olefin copolymers having from 3 to 20 carbon atoms in the presence of a single site catalyst, such as a metallocene catalyst. Preferred are bimodal copolymers of ethylene and at least two alpha-olefin comonomers, like those disclosed in WO 2005/002744.
The blends are advantageously used in extrusion coating and have a good processability.
Even though the prior art offers already a variety of products useful for extrusion coating having relatively good processability at high line speed and/or one or more other advantageous properties, there is still demand for further improvement of these properties.

Summary of the Invention

The objective of the present invention is therefore to provide a polyethylene composition suitable for extrusion coating, which shows improved processability at high line speed and an unexpectedly good combination of web stability, neck in and draw down.
It has now surprisingly been found that by combining a high pressure low density polyethylene homopolymer, produced in a tubular reactor, with a special LDPE, as disclosed in EP 1 777 238, produced in an autoclave reactor, polyethylene compositions ideal for extrusion coating may be produced which show all the desired above mentioned properties.
Therefore the object of the invention is solved by an extrusion coating polyethylene composition A), comprising

a) 70 wt% - 98wt% of a high pressure low density polyethylene homopolymer, produced in a tubular reactor, having a melt index of 2 to 8 g/10 min according to ISO 1133 (190°C, 2.16 kg) and a density of 915 to 935 kg/m³ according to ISO 1183 and
b) 2 wt% - 30 wt% of a long chain branched, low-density polyethylene, having a melt index $MFR_2$ of 2.5 to 10.0 g/10 min according to ISO 1133 (190°C, 2.16 kg), a density of 910 to 935 kg/m³ according to ISO 1183 and

- a dynamic viscosity $\eta_{0.05}$ at a shear rate of 0.05 rad/s and a dynamic viscosity $\eta_{300}$ rad/s which satisfy the following relationship:

$$\eta_{300} \leq 108 \text{ Pa*s} + 0.0253* \eta_{0.05}$$

and/or
- a phase shift $\delta_{0.5}$ at a frequency of 0.5 rad/s and a phase shift $\delta_{300}$ at a frequency of 300 rad/s, which satisfy the following relationship:

$$\tan \delta_{300} \geq 0.45 + 0.164^* \tan \delta_{0.05}$$

a) tubular low density Polyethylene homopolymer

"polyethylene homopolymer" as used herein is intended to encompass polymers which consist essentially of repeat units deriving from ethylene. Homopolymers may, for example, comprise at least 99.8 %, preferably at least 99.9 %, by weight of repeat units deriving from ethylene.

Polymerization of ethylene polymers by free radical initiated polymerization at high pressure (referred to as high pressure radical polymerization) is well known in the art. Generally, the polymerization is performed by reacting the monomers under the action of one or more radical initiators, such as peroxides, oxygen, azo compounds or combinations thereof, in a reactor at a temperature of about 150 to 350°C and at a pressure of about 100 to 400 MPa. The monomers are normally compressed in several stages up to the desired pressure before introduction into the reactor. Component a) as used according to the invention is produced in a tubular reactor. A tubular reactor typically consists of several hundred meters of jacketed high pressure tubing arranged as a series of straight sections connected by 180° bends. Tubular reactors are either single-feed or multi-feed reactors, including split-feed reactors. In a single-feed tubular reactor (also referred to as front-feed reactor), the total monomer flow is fed to the inlet of the first reaction zone. In a multi-feed tubular reactor, the monomers are fed into the reactor at several locations along the reactor. In a split-feed reactor, the compressed monomer mixture are split into several streams and fed into the reactor at different locations thereof.

Reaction is started by injection of the radical initiator and by an increase in temperature. The reaction mixture cools after the first reaction peak and additional initiator is added to start a second reaction zone. The number of initiator injection points determines the number of reaction zones. A tubular reactor for production of ethylene polymers by high pressure radical polymerization usually comprises a total of two to five reaction zones. When the reaction is completed, the temperature and the pressure are lowered, typically in two steps using a high-pressure separator and a low-pressure separator. The resulting polymer is recovered and non-reacted monomers are either removed or recycled back to the reactor.

As radical initiators, initiators commonly known in the art may be employed. Further details of the production of ethylene polymers by high pressure radical polymerization can be found for example in the Encyclopedia of Polymer Science and Engineering, Vol. 6 (1986), pp 383-410.

Suitable tubular technologies/processes are well known in the art. Examples are LyondellBasell Lupotech® T, SABTEC CTR® tubular LDPE technology, ExxonMobil Chemical's high pressure tubular process or DSM's 'Clean Tubular Reactor Technology'.

LDPE produced in a tubular reactor and being suitable to be used in the composition according to the invention has a melt index of 2 to 8 g/10 min according to ISO 1133 (190°C, 2.16 kg), preferably of 3 to 6 g/10 min.

The density of the LDPE used as component a) is 915 to 935 $kg/m^3$ according to ISO 1183, preferably 920 to 930 $kg/m^3$.

Furthermore LDPE produced in a tubular reactor and being suitable to be used in the composition according to the invention has a number average molecular weight, $M_n$, of from 8000 to 30000 g/mol, more preferably from 10000 to 20000. Also it preferably has a weight average molecular weight, $M_w$, of from 100000 to 300000 g/mol, preferably from 120000 to 200000 g/mol. It also preferably has a molecular weight distribution, defined as a ratio of the weight average molecular weight to the number average molecular weight, $M_w/M_n$, of from 5 to 40, more preferably from 8 to 20.

b) Long chain branched low density polyethylene

Low density ethylene polymers, especially such produced in an autoclave reactor, contain long chain branches and are thus different from linear copolymers of ethylene and alpha-olefin comonomers produced in the presence of a Ziegler or a metallocene catalyst. Especially, the presence of the long chain branches causes clear differences in the rheological behaviour of the polymer.

The low density ethylene polymer (LDPE) used as component b) according to the present invention is described in EP 1 777 238.

The patent referred to in this specification is incorporated by reference herein.

This special LDPE has a melt index according to ISO 1133 (190°C, 2.16 kg) (MFR) of from 2.5 to 10 g/10 min, especially from 2.5 to 6.5 g/10 min and in particular from 3 to less than 6 g/10 min; a density according to ISO 1183 of from 910 to 935 $kg/m^3$, and $\eta_{0.05}$, the dynamic viscosity at a shear rate of 0.05 rad/s, and $\eta_{300}$, the dynamic viscosity at a shear rate of 300 rad/s, satisfy the following relationship:

$$\eta_{300} \leq 108 + 0.0253 \cdot \eta_{0.05}$$

Preferably, $\eta_{0.05}$ and $\eta_{300}$ satisfy the following relationship:

$$\eta_{300} \leq 102 \text{ Pa} * \text{s} + 0.0253 * \eta_{0.05} \;.$$

Preferably, tan $\delta_{0.5}$, the value of the tangent of the phase shift at a frequency of 0.5 rad/s, and tan $\delta_{300}$, the value of the tangent of the phase shift at a frequency of 300 rad/s, of the low density polyethylene satisfy the following relationship:

$$\tan \delta_{300} \geq 0.45 + 0.164 \cdot \tan \delta_{0.5}$$

Alternatively the low density ethylene polymer having a melt index $MFR_2$ of from 2.5 to 10 g/10 min, especially from 2.5 to 6.5 g/10 min and in particular from 3 to less than 6 g/10 min, a density of from 910 to 935 kg/m³, can have a tan $\delta_{0.5}$, the value of the tangent of the phase shift at a frequency of 0.5 rad/s, and tan $\delta_{300}$, the value of the tangent of the phase shift at a frequency of 300 rad/s, which satisfy the following relationship:

$$\tan \delta_{300} \geq 0.45 + 0.164 \cdot \tan \delta_{0.5}$$

In a preferred embodiment, $\eta_{0.05}$, the dynamic viscosity at a shear rate of 0.05 rad/s, and $\eta_{300}$, the dynamic viscosity at a shear rate of 300 rad/s, of the low density polyethylene satisfy the following relationship:

$$\eta_{300} \leq 108 + 0.0253 \cdot \eta_{0.05} \;,$$

even more preferably the following relationship:

$$\eta_{300} \leq 102 \text{ Pa} * \text{s} + 0.0253 * \eta_{0.05} \;.$$

The special low density ethylene polymer used as component a) has a higher content of long chain branches per 1000 atoms in the polymer backbone than the traditional low density polyethylenes of the prior art.

Preferably, the low density ethylene polymer has a dynamic viscosity at a shear rate of 0.05 rad/s, $\eta_{0.05}$, of from 1000 to 10000 Pa·s, more preferably from 1500 to 7000 Pa·s and in particular from 2000 to 5000 Pa·s.

Further still, the low density ethylene polymer has a value of tan $\delta_{0.5}$, the value of the tangent of the phase shift at a frequency of 0.5 rad/s of from 1.5 to 3.0, more preferably from 1.9 to 2.8, and a value of tan $\delta_{300}$, the value of the tangent of the phase shift at a frequency of 300 rad/s of from 0.8 to 1.0, more preferably from 0.85 to 0.95.

Preferably still, the low density ethylene component has a shear thinning index $SHI_{1/100}$ of from 20 to 60, more preferably from 30 to 50.

It is also preferred that the low density ethylene polymer has a number average molecular weight, $M_n$, of from 8000 to 30000 g/mol, more preferably from 10000 to 25000. Also it preferably has a weight average molecular weight, $M_w$, of from 400000 to 750000 g/mol, preferably from 470000 to 650000 g/mol. It also preferably has a molecular weight distribution, defined as a ratio of the weight average molecular weight to the number average molecular weight, $M_w/M_n$,

of from 20 to 50, more preferably from 25 to 40.

Preferably, the low-density polyethylene has a storage modulus G'(5 kPa), measured at a loss modulus G" of 5 kPa, within the range of 3000 to 3600 Pa, more preferably 3200 to 3500 Pa.

The low density polyethylene is produced in a high pressure process. In such processes ethylene is polymerised at an elevated temperature of from 150 to 350°C and at a high pressure of from 1000 to 3000 bar. The polymerisation reaction is initiated by using free radical initiators. Ethylene and at least one initiator are introduced into the reactor at a high temperature and pressure. The polymerisation reaction occurs in solution comprising ethylene in a supercritical state and polyethylene dissolved therein in a short time, typically less than 10 minutes and usually from about 30 seconds to about 5 minutes. The reaction mixture including the polymer is withdrawn from the reactor, unreacted ethylene is removed from the solution and the polymer melt is extruded, cooled, cut into pellets and recovered. A short description of high pressure processes for ethylene polymerisation is given, among others, in Vieweg, Schley and Schwarz: Kunststoff Handbuch, Band IV, Polyolefine, Carl Hanser Verlag (1969), pages 39 to 51.

Preferably the polymerisation process is conducted in an autoclave reactor. The autoclave reactor is a continuously operating stirred reactor. In such reactors it is common to have multiple entry points for ethylene and initiator. Usually there is one withdrawal point for the polymer solution, but it is possible to have also multiple product withdrawal points.

Thus, the autoclave reactor can be considered to comprise different zones. A first zone is located in the upstream part of the reactor and the first ethylene and initiator feeds occur in this zone. A second zone is located downstream of the first zone, and ethylene and initiators are also introduced into the second zone. A third zone is located further downstream of the second zone. Into the third zone ethylene is introduced and also minor amounts of initiator may be introduced, even though this is not necessarily done. Downstream of the third zone is a fourth zone, from which the reaction product is withdrawn. Ethylene may be introduced into the fourth zone also. However, initiator is not usually introduced into the fourth zone.

Because the high viscosity of the reaction mixture and low heat transfer area the heat transfer through the autoclave wall is usually insufficient to remove the heat of the reaction. Therefore, the most useful way to control the temperature in the polymerisation reactor is by ethylene and initiator feeds to the different zones. Such methods are known to the person skilled in high pressure ethylene polymerisation technology.

In the preparation of the LDPE polymer used according to the present invention as component b) the polymerisation is preferably conducted at a pressure of 1200 to 2000 bar, more preferably from 1350 to 1700 bar. The temperature within the autoclave is preferably from 230 to 300°C. More preferably, the temperature in the first zone of the reactor is from 230 to 255 °C, and the temperature in the fourth zone of the reactor is from 270 to 300°C.

A further possibility to produce LDPE polymers used according to the invention is using a tubular reactor instead of the autoclave reactor in the well-known high pressure processes.

While the low density ethylene polymer of the invention may be produced with one initiator only, it is preferred to use multiple initiators, which are introduced to different entry points in the reactor. Typically, the initiators are introduced into the first and second zones of the reactor. Especially preferably, a first initiator or a mixture of first initiators is introduced into the first zone and/or the second zone of the reactor and a second initiator or a mixture of second initiators is introduced into the second zone and/or third zone of the reactor. Preferably the first initiator or the first mixture of initiators comprises from about 50 to 80 %, more preferably from 60 to 75 % by weight of the total amount of the initiators, and the second initiator or the second mixture of initiators comprises from about 20 to 50 %, more preferably from 25 to 40 % by weight of the total amount of the initiators.

Compounds suitable to be used as the first initiator preferably have a half-life of 0.1 hours at a temperature within the range of from 120 to 152°C, a half life of 1 hour at a temperature within the range of from 100 to 131°C and a half life of 10 hours at a temperature within the range of from 81 to 111°C. As the person skilled in the art knows, the half-life of 1 hour at a certain temperature means that at that temperature 50 % of the initial amount of initiator has decomposed after one hour. Examples of compounds suitable to be used as the first initiator are, among others, tert-butyl peroxyacetate (CAS number 107-71-1), tert-butylperoxy-2-ethylhexyl carbonate (34443-12-4), tert-butyl peroxy-benzoate (614-45-9), tert-butylperoxy isopropyl carbonate (2372-21-6), 2,2-di(tert-butylperoxy)butane (2167-23-9) and tert-butylperoxy-3,5,5-trimethylhexaonate (13122-18-4).

Compounds suitable to be used as the second initiator preferably have a half-life of 0.1 hours at a temperature within the range of from 152 to 200°C, a half life of 1 hour at a temperature within the range of from 131 to 170 °C and a half life of 10 hours at a temperature within the range of from 111 to 141°C. Examples of such compounds are, among others, di-tert-butylperoxide (110-05-4), 3,6,9-triethyl-3,6,9-trimethyl-1,4,7-triperoxononane (24748-23-0), isopropylcumyl hydroperoxide (26762-93-6) and cumyl hydroperoxide (80-15-9).

Composition A

According to the invention composition A comprises 70 to 98wt% of component a) (tubular LDPE) and 2 to 30 wt% of component b) (long chain branched LDPE). Preferably composition A comprises 80 to 95wt% of component a) and 5 to 20 wt% of component b), more preferably composition A comprises 80 to 90wt% of component a) and 10 to 20 wt% of component b),

The extrusion coating composition in accordance with the present invention may furthermore comprise small amounts of additional, conventional components (additives), commonly used and well known in the extrusion coating art. The type and amount of such additives can be selected by the skilled person on the basis of the general knowledge in the art. Typically these additive do not amount to more than 5 wt% (in total), based on the composition.

The extrusion coating composition may be prepared in a usual manner, including blending the individual components using appropriate devices, such as drum mixers kneaders and extruders.

Thus the extrusion coating composition of the present invention may be prepared by mixing the two components and optionally one ore more additives, as described above, to form a dry blend or to form a blend which is then melt kneaded.

The melt-kneading may be carried out using a kneading machine, such as a mixing roll, a Branbury mixer, a kneader, or a single-screw or twin-screw extruder.

The composition A is advantageously used in extrusion coating, where they exhibit a number of advantageous features. First, the compositions have a good processability and they can be used in coating lines having a line speed of at least 200 m/min, preferably at least 400 m/min and in particular at least 500 m/min, and with low coating weights.

Further they show edge and web stability, low neck-in and high draw down.

When used in the coating process they exhibit a reduced risk of draw resonance and an even distribution of the coating is obtained. These two features allow a high throughput in the coating line with a good product quality.

The substrate to be coated can be any substrate known in the art, such as paper, paperboard, Kraft paper, metal foil, plastic films, such as BOPP (bi-oriented polypropylene) film, and cellophane film. To improve the adhesion between the substrate and the plastic layer the methods commonly known in the art may be used, such as ozone treatment of the molten polymer film, flame treatment and corona treatment of the substrate, an adhesive layer may be used, and an adhesion promoter may be used.

Extrusion coating process

The extrusion coating process may be carried out using conventional extrusion coating techniques. Hence, the polymer composition A is fed, optionally together with additives, to an extruding device. From the extruder the polymer melt is passed through a flat die to the substrate to be coated. Due to the distance between the die lip and the nip, the molten plastic is oxidised in the air for a short period, usually leading to an improved adhesion between the coating and the substrate. The coated substrate is cooled on a chill roll, after which it is passed to edge trimmers and wound up. The width of the line may vary between, for example 500 to 1500 mm, e.g. 800 to 1100 mm, with a line speed of up to 5000 m/min, preferably up to 1500 m/min and more preferably up to 1000 m/min, for instance 500 to 800 m/min. The temperature of the polymer melt is typically between 270 and 320°C.

It is also possible to employ a coating line with at least two extruders to make it possible to produce multilayered coatings with different polymers. It is also possible to have arrangements to treat the polymer melt exiting the die to improve adhesion, e.g. by ozone treatment, corona treatment or flame treatment.

The coating will typically be 10 to 1000 $\mu$m in thickness, especially 20 to 100 $\mu$m. The specific thickness will be selected according to the nature of the substrate and its expected subsequent handling conditions. The substrate may be as thick as 10 to 1000 $\mu$m, e.g. 6 to 300 $\mu$m.

In the following, the present invention is described by way of examples.

**Definitions/Measuring Methods**

The following definitions of terms and determination methods apply for the above general description of the invention as well as to the below examples unless otherwise defined.

**Molecular weights, molecular weight distribution (Mn, Mw, MWD) - GPC**

The weight average molecular weight Mw and the molecular weight distribution (MWD = Mw/Mn wherein Mn is the number average molecular weight and Mw is the weight average molecular weight) was measured by a method based on ISO 16014-1:2003 and ISO 16014-4:2003. A Waters Alliance GPCV 2000 instrument, equipped with refractive index detector and online viscosimeter was used with 3 x TSK-gel columns (GMHXL-HT) from TosoHaas and 1,2,4-trichlorobenzene (TCB, stabilized with 200 mg/L 2,6-Di tert butyl-4-methyl-phenol) as solvent at 145°C and at a constant flow rate of 1 mL/min. 216.5 $\mu$L of sample solution were injected per analysis. The column set was calibrated using relative calibration with 19 narrow MWD polystyrene (PS) standards in the range of 0.5 kg/mol to 11 500 kg/mol and a set of well characterised broad polypropylene standards. All samples were prepared by dissolving 5 - 10 mg of polymer in 10 mL (at 160°C) of stabilized TCB (same as mobile phase) and keeping for 3 hours with continuous shaking prior sampling in into the GPC instrument.

The **melt flow rates** were measured with a load of 2.16 kg and at 190°C. The melt flow rate (MFR) is that quantity of polymer in grams which the test apparatus standardized to ISO 1133 extrudes within 10 minutes at a temperature of 190°C under a weight of 2.16 kg.

**Density** was determined according to ISO 1183-1987 on compression-moulded specimens

**Dynamic viscosity and Shear thinning index**

Dynamic rheological measurements were carried out with a rheometer, namely Rheometrics RDA-11, on compression moulded samples under nitrogen atmosphere at 190°C using 25 mm diameter plates and plate and plate geometry with a 1.2 mm gap. The oscillatory shear experiments were done within the linear viscosity range of strain at frequencies from 0.05 to 300 rad/s (ISO 6721-1). Five measurement points per decade are made.

The values of storage modulus (G'), loss modulus (G") complex modulus (G*) and complex viscosity ($\eta$*) were obtained as a function of frequency ($\omega$). $\eta_{100}$ is used as abbreviation for the complex viscosity at the frequency of 100 rad/s.

Shear thinning index (SHI), which correlates with MWD and is independent of Mw, was calculated according to Heino ("Rheological characterization of polyethylene fractions" Heino, E.L., Lehtinen, A., Tanner J., Seppälä, J., Neste Oy, Porvoo, Finland, Theor. Appl. Rheol., Proc. Int. Congr. Rheol, 11th (1992), 1, 360-362, and "The influence of molecular structure on some rheological properties of polyethylene", Heino, E.L., Borealis Polymers Oy, Porvoo, Finland, Annual Transactions of the Nordic Rheology Society, 1995.)

SHI value is obtained by calculating the complex viscosities $\eta$*(1 kPa) and $\eta$*(100 kPa) at a constant value of complex modulus of 1 kPa and 100 kPa, respectively. The shear thinning index SHI1/100 is defined as the ratio of the two viscosities $\eta$*(1 kPa) and $\eta$*(100 kPa), i.e. $\eta$(1)/$\eta$(100).

The definitions and measurement conditions are also described in detail on page 8, line 29 to page 11, line 25 of WO 00/22040.

It is usually not practical to measure the complex viscosity at the value of frequency of 0.05 rad/s directly. The value can be extrapolated by conducting the measurements down to the frequency of 0.126 rad/s, drawing the plot of complex viscosity vs. frequency, drawing a best-fitting line through the five points corresponding to the lowest values of frequency and reading the viscosity value from this line.

The phase shift $\delta$ indicates how much the dynamic response measured from the polymer is shifted with respect to the input signal. The phase shift is given in radians. The frequency which was used in the measurement is indicated as a subscript. Thus, $\delta_{0.5}$ indicates the phase shift measured at 0.5 rad/s frequency. Often the value of tan$\delta$, i.e. the tangent of the phase shift, is used instead of $\delta$.

**Draw down** DD (10g/m$^2$) was determined by keeping the coating weight constant (10 g/m$^2$) during the testing period. The starting line speed was 100 m/min and it was increased stepwise with steps of 100 m/min in five seconds time until web break or 500 m/min was reached.

**Neck-in** was determined as the difference between the width of the die and the width of the coating on the substrate.

**Basis weight** was determined as follows: Five samples were cut off from the extrusion coated paper parallel in the transverse direction of the line. The size of the samples was 10 cm x 10 cm. The samples were put into a solvent for 10 - 30 minutes, after which the paper was removed from the plastic and the solvent was allowed to evaporate. The samples were then weighed and the average was calculated. The result was given as a weight of the plastic per square meter.

**Example 1: Preparation of component b)**

A polymerisation reactor of autoclave type was used. Ethylene was introduced into the reactor to the different levels so that the temperatures at each level were as indicated in Table 1. Two initiators were used so that initiator 1 was introduced to levels 9 and 7 and initiator 2 into level 5. Initiator 1 was a peroxide having a half-life of 0.1 hours at a temperature of 142°C, a half-life of 1 hour at a temperature of 122 °C and a half-life of 10 hours at a temperature of 103 °C. Initiator 2 had a half-life of 0.1 hours at a temperature of 164 °C, a half-life of 1 hour at a temperature of 141 °C and a half-life of 10 hours at a temperature of 121°C. The pressure within the reactor was 1500 bar and the temperature at the different levels was from 242 to 248 °C. The conditions can be seen in Table 1.

The polymer collected from the reactor was extruded into pellets. It had MFR of 4.5 g/10 min and a density of 917 kg/m$^3$. It had further $\eta_{0.05}$ of 3690 Pa·s and $\eta_{300}$ of 180 Pa·s. The value of tan$\delta$ at frequencies of 0.5 and 300 rad/s was 2.3 and 0.88, respectively. G' (5kPa) was 3433 Pa. It further had $M_n$ of 17500 g/mol and $M_w$ of 629000 g/mol. The polydispersity index, $M_w/M_n$ was thus 36.

Table 1: reactor conditions

| Reactor condition | Unit | Value |
|---|---|---|
| Temperature, level 9 | °C | 242 |
| Temperature, level 8 | °C | 242 |
| Temperature, level 7 | °C | 242 |
| Temperature, level 6 | °C | 252 |
| Temperature, level 5 | °C | 259 |
| Temperature, level 4 | °C | 275 |
| Temperature, level 3 | °C | 280 |
| Temperature, level 2 | °C | 281 |
| Temperature, level 1 | °C | 284 |
| Pressure | bar | 1516 |
| Initiator feed, level 9 | kg/h | 25 |
| Initiator feed, level 7 | kg/h | 17.5 |
| Initiator feed, level 5 | kg/h | 17.5 |
| Initiator feed, level 3 | Kg/h | 3 |
| Production rate | t/h | 8.5 |

**Example 2 : Preparation of component b)**

The procedure of Example 1 was repeated except that the conditions were slightly varied to produce a polymer having an MFR of 6.5 g/10 min and density of 917 kg/m$^3$. The resulting LDPE polymer had further $\eta_{0.05}$ of 2369 Pa·s and $\eta_{300}$ of 161 Pa·s. The value of tan$\delta$ at frequencies of 0.5 and 300 rad/s was 2.6 and 0.93, respectively. G' (5kPa) was 3307 Pa.

**Example 3 to 5**

FT7245, a low density polyethylene homopolymer produced in a tubular reactor (MFR 4.0g/10 min according to ISO 1133, 190°C, 2.16kg; density 924 kg/m$^3$ according to ISO 1183; containing 1050 ppm of synthetic silica and 850 ppm of erucamide as antiblock and slip agents; Borealis) was mixed with polymer pellets obtained from Example 2 so that the content of LDPE from Example 2 was 0wt% (Example 3), 5wt% (Example 4) respectively 15% (example 5) by weight of the total polymer composition A.
The mixtures were prepared as dry blends in a drum mixer.

**Example 6 to 8**

Extrusion coating runs were made on Beloit coextrusion coating line. It had a Peter Cloeren's die and a five layer feed block. The width of the line was 850 - 1000 mm and the maximum line speed was 1000 m/min (design value).
In the coating line above a UG kraft paper having a basis weight of 70 g/m$^2$ was coated with a layer of the polymer compositions prepared according to the Examples 3 to 5, having a basis weight of 10 g/m$^2$. The temperature of the polymer melt was set to 315°C.

Table 1: Extrusion coating conditions

| Conditions | Unit | Example 3 FT7245 + 0% | Example 4 FT7245 + 5% | Example 5 FT7245 + 15% |
|---|---|---|---|---|
| Max line speed | m/min | > 500 | > 500 | > 500 |
| Neck-in (at 200 m/min) | mm | 208 | 164 | 131 |

(continued)

| Conditions | Unit | Example 3 FT7245 + 0% | Example 4 FT7245 + 5% | Example 5 FT7245 + 15% |
|---|---|---|---|---|
| Neck-in (at 300 m/min) | mm | 180 | 157 | 122 |
| Edge stability | | 5 mm weaving | 2-5 mm weaving | stable |

Composition A could be processed at a line speed of more than 500 m/min in all cases.

As comparative example CA7230 (low density polyethylene for extrusion coating, produced in an autoclave, MFR 4.5 g/10 min according to ISO 1133, 190°C, 2.16kg; density 923 kg/m$^3$ according to ISO 1183, Borealis) was tested under the same conditions as for compositions A. A maximum line speed of only 400 m/min was reached.

It could be seen that the blends of the invention have a substantially reduced neck-in than the non-blended tubular LDPE. It also can be seen that the neck-in is reduced when increasing the line speed.

**Claims**

1. Extrusion coating polyethylene composition A), comprising

   a) 70 wt% - 98wt% of a high pressure low density polyethylene homopolymer, produced in a tubular reactor, having a melt index of 2 to 8 g/10 min according to ISO 1133 (190°C, 2.16 kg) and a density of 915 to 935 kg/m$^3$ according to ISO 1183 and
   b) 2 wt% - 30 wt% of a long chain branched, low-density polyethylene, having a melt index MFR of 2.5 to 10.0 g/10 min according to ISO 1133 (190°C, 2.16 kg), a density of 910 to 935 kg/m$^3$ according to ISO 1183 and

   - a dynamic viscosity $\eta_{0.05}$ at a shear rate of 0.05 rad/s and a dynamic viscosity $\eta_{300}$ rad/s which satisfy the following relationship:

$$\eta_{300} \leq 108 \text{ Pa*s} + 0.0253* \eta_{0.05}$$

   and/or
   - a phase shift $\delta_{0.5}$ at a frequency of 0.5 rad/s and a phase shift $\delta_{300}$ at a frequency of 300 rad/s, which satisfy the following relationship:

$$\tan \delta_{300} \geq 0.45 + 0.164* \tan \delta_{0.05}$$

2. Extrusion coating polyethylene composition A) according to claim 1, wherein the high pressure low density polyethylene homopolymer, produced in a tubular reactor a) has an MFR of 3 to 6 according to ISO 1133 (190°C, 2.16 kg) and a density of 920 to 930 kg/m$^3$ according to ISO 1183.

3. Extrusion coating polyethylene composition A) according to claim 1 or 2, wherein the high pressure low density polyethylene homopolymer, produced in a tubular reactor a) has a number average molecular weight of from 8000 to 30000 g/mol, a weight average molecular weight of from 100000 to 300000 g/mol and a molecular weight distribution of from 5 to 40.

4. Extrusion coating polyethylene composition A) according to any one of the preceding claims 1 to 3, wherein said long chain branched, low-density polyethylene b) has a melt index MFR of from 2.5 - 6.5 g/10min according to ISO 1133 (190°C, 2.16 kg).

5. Extrusion coating polyethylene composition A) according to any one of the preceding claims 1 to 4, wherein said long chain branched, low-density polyethylene b) has a number average molecular weight of from 8000 to 30000 g/mol, a weight average molecular weight of from 400000 to 750000 g/mol and a molecular weight distribution of from 20 to 50.

**6.** Extrusion coating polyethylene composition A) according to any one of the preceding claims 1 to 5, comprising

a) 80 wt% - 95wt% of the high pressure low density polyethylene homopolymer, produced in a tubular reactor and
b) 5 wt% - 20 wt% of the long chain branched, low-density polyethylene.

**7.** Use of extrusion coating polyethylene compositions A according to any one of claims 1 to 6 for extrusion coating.

**8.** Use of extrusion coating polyethylene compositions A according to claim 7, **characterized in that** line speeds of $\geq$ 500 m/min are used.

**Patentansprüche**

**1.** Polyethylenzusammensetzung A) für das Extrusionsbeschichten, umfassend:

a) 70 bis 98 Gew.-% eines Hochdruckpolyethylen-Homopolymers niedriger Dichte, das in einem Rohrreaktor erzeugt wurde, mit einem Schmelzindex von 2 bis 8 g/10 min, und zwar gemäß ISO 1133 (190°C, 2,16 kg), und einer Dichte von 915 bis 935 kg/m$^3$, und zwar gemäß ISO 1183, und
b) 2 bis 30 Gew.-%% eines langkettig verzweigten Polyethylens niedriger Dichte mit einem Schmelzindex MFR von 2,5 bis 10,0 g/10 min, und zwar gemäß ISO 1133 (190°C, 2,16 kg), einer Dichte von 910 bis 935 kg/m$^3$, und zwar gemäß ISO 1183, und

- einer dynamischen Viskosität η0,05, bei einer Scherrate von 0,05 rad/s, und einer dynamischen Viskosität η300 rad/s, die folgendem Zusammenhang entsprechen:

$$\eta_{300} \leq 108 \text{ Pa·s} + 0{,}0253 \cdot \eta_{0,05}$$

und/oder
- einer Phasenverschiebung δ0,5, bei einer Frequenz von 0,5 rad/s, und einer Phasenverschiebung $\delta_{300}$, bei einer Frequenz von 300 rad/s, die folgendem Zusammenhang entsprechen:

$$\tan \delta_{300} \geq 0{,}45 + 0{,}164 \cdot \tan \delta_{0,5}.$$

**2.** Polyethylenzusammensetzung A) für das Extrusionsbeschichten nach Anspruch 1, wobei das Hochdruckpolyethylen-Homopolymer niedriger Dichte, das in einem Rohrreaktor erzeugt wurde, a) einen MFR von 3 bis 6, und zwar gemäß ISO 1133 (190°C, 2,16 kg), und eine Dichte von 920 bis 930 kg/m$^3$, und zwar gemäß ISO 1183, aufweist.

**3.** Polyethylenzusammensetzung A) für das Extrusionsbeschichten nach Anspruch 1 oder 2, wobei das Hochdruckpolyethylen-Homopolymer niedriger Dichte, das in einem Rohrreaktor erzeugt wurde, a) ein Zahlenmittel des Molekulargewichts von 8.000 bis 30.000 g/Mol, ein Gewichtsmittel des Molekulargewichts von 100.000 bis 300.000 g/Mol und eine Molekulargewichtsverteilung von 5 bis 40 aufweist.

**4.** Polyethylenzusammensetzung A) für das Extrusionsbeschichten nach einem der vorstehenden Ansprüche 1 bis 3, wobei das langkettig verzweigte Polyethylen niedriger Dichte b) einen Schmelzindex MFR von 2,5 bis 6,5 g/10 min aufweist, und zwar gemäß ISO 1133 (190°C, 2,16 kg).

**5.** Polyethylenzusammensetzung A) für das Extrusionsbeschichten nach einem der vorstehenden Ansprüche 1 bis 4, wobei das langkettig verzweigte Polyethylen niedriger Dichte b) ein Zahlenmittel des Molekulargewichts von 8.000 bis 30.000 g/Mol, ein Gewichtsmittel des Molekulargewichts von 400.000 bis 750.000 g/Mol und eine Molekulargewichtsverteilung von 20 bis 50 aufweist.

**6.** Polyethylenzusammensetzung A) für das Extrusionsbeschichten nach einem der vorstehenden Ansprüche 1 bis 5, umfassend

a) 80 bis 95 Gew.-% des Hochdruckpolyethylen-Homopolymers niedriger Dichte, das in einem Rohrreaktor erzeugt wurde, und
b) 5 bis 20 Gew.-% des langkettig verzweigten Polyethylens niedriger Dichte.

**7.** Verwendung von Polyethylenzusammensetzungen A für das Extrusionsbeschichten nach einem der Ansprüche 1 bis 6 für das Extrusionsbeschichten.

**8.** Verwendung von Polyethylenzusammensetzungen A für das Extrusionsbeschichten nach Anspruch 7, **dadurch gekennzeichnet, daß** Geschwindigkeiten der Anlage von ≥ 500 m/min angewendet werden.

**Revendications**

**1.** Composition de revêtement par extrusion à base de polyéthylène (A) comprenant

a) de 70 % en poids à 98 % en poids d'un homopolymère de polyéthylène basse densité à pression élevée, produit dans un réacteur tubulaire, possédant un indice de fusion de 2 à 8 g/10 minutes conformément à la norme ISO 1133 (190 °C, 2,16 kg) et une densité de 915 à 935 kg/m$^3$ conformément à la norme ISO 1183, et
b) de 2 % en poids à 30 % en poids d'un polyéthylène basse densité ramifié à longue chaîne, ayant un indice de fusion MFR de 2,5 à 10,0 g/10 minutes conformément à la norme ISO 1133 (190°C, 2,16 kg), une densité de 910 à 935 kg/m$^3$ conformément à la norme ISO 1183, et

- une viscosité dynamique $\eta_{0,05}$ à une vitesse de cisaillement de 0,05 rad/s et une viscosité dynamique $\eta_{300}$ en rad/s qui satisfont l'équation suivante :

$$\eta_{300} \leq 108 \text{ Pa*s} + 0,0253 * \eta_{0,05}$$

et/ou
- un déphasage $\delta_{0,5}$ à une fréquence de 0,5 rad/s et un déphasage $\delta_{300}$ à une fréquence de 300 rad/s, qui satisfont l'équation suivante :

$$\tan \delta_{300} \geq 0,45 + 0,164 * \tan \delta_{0,5}.$$

**2.** Composition de revêtement par extrusion à base de polyéthylène (A) selon la revendication 1, dans laquelle l'homopolymère de polyéthylène basse densité à pression élevée, produit dans un réacteur tubulaire (a) possède un MFR de 3 à 6 conformément à la norme ISO 1133 (190 °C, 2,16 kg) et une densité de 920 à 930 kg/m$^3$ conformément à la norme ISO 1183.

**3.** Composition de revêtement par extrusion à base de polyéthylène (A) selon la revendication 1 ou 2, dans laquelle l'homopolymère de polyéthylène basse densité à pression élevée, produit dans un réacteur tubulaire (a) possède un poids moléculaire moyen en nombre de 8000 à 30 000 g/mol, un poids moléculaire moyen en poids de 100 000 à 300 000 g/mol et une distribution de poids moléculaire de 5 à 40.

**4.** Composition de revêtement par extrusion à base de polyéthylène (A) selon l'une quelconque des revendications 1 à 3, dans laquelle ledit polyéthylène basse densité ramifié à longue chaîne (b) possède un indice de fusion MFR de 2,5 à 6,5 g/10 minutes conformément à la norme ISO 1133 (190 °C, 2,16 kg).

**5.** Composition de revêtement par extrusion à base de polyéthylène (A) selon l'une quelconque des revendications 1 à 4, dans laquelle ledit polyéthylène basse densité ramifié à longue chaîne (b) possède un poids moléculaire moyen en nombre de 8000 à 30 000 g/mol, un poids moléculaire moyen en poids de 400 000 à 750 000 g/mol et une distribution de poids moléculaire de 20 à 50.

6. Composition de revêtement par extrusion à base de polyéthylène (A) selon l'une quelconque des revendications 1 à 5; comprenant

   a) de 80% en poids à 95 % en poids d'un homopolymère de polyéthylène basse densité à pression élevée, produit dans un réacteur tubulaire,
   b) de 5 % en poids à 20 % en poids d'un polyéthylène basse densité ramifié à longue chaîne.

7. Utilisation des compositions de revêtement par extrusion à base de polyéthylène (A) selon l'une quelconque des revendications 1 à 6, pour un revêtement par extrusion.

8. Utilisation des compositions de revêtement par extrusion à base de polyéthylène (A) selon la revendication 7, **caractérisée en ce qu'**on utilise des débits en ligne de $\geq$ 500 m/minute.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006096504 A
- US 20070225445 A
- EP 1777238 A
- WO 2005002744 A
- WO 0022040 A

**Non-patent literature cited in the description**

- *Encyclopedia of Polymer Science and Engineering,* 1986, vol. 6, 383-410
- Polyolefine. **Vieweg ; Schley ; Schwarz.** Kunststoff Handbuch. Carl Hanser Verlag, 1969, vol. IV, 39-51
- **Heino, E.L. ; Lehtinen, A. ; Tanner J. ; Seppälä, J. ; Neste Oy ; Porvoo, Finland.** Rheological characterization of polyethylene fractions. *Theor. Appl. Rheol., Proc. Int. Congr. Rheol,* 1992, vol. 1, 360-362
- **Heino, E.L. ; Borealis Polymers Oy ; Porvoo, Finland.** The influence of molecular structure on some rheological properties of polyethylene. *Annual Transactions of the Nordic Rheology Society,* 1995